# EUROPÄISCHE PATENTSCHRIFT

(11) **EP 1 139 790 B1**
(45) Veröffentlichungstag und Bekanntmachung des Hinweises auf die Patenterteilung: **27.08.2014**
(21) Anmeldenummer: 99973533.5
(22) Anmeldetag: 23.11.1999
(51) Int. Cl.: A23L 1/216, A23L 1/217

(54) **NAHRUNGSMITTELPRODUKT ENTHALTEND AMYLOPEKTIN UND VERFAHREN ZU DESSEN HERSTELLUNG**
FOOD PRODUCT CONTAINING AMYLOPECTIN AND METHOD FOR PRODUCING SAME
PRODUIT ALIMENTAIRE CONTENANT DE L'AMYLOPECTINE ET SON PROCEDE DE PRODUCTION

(30) Priorität: 28.12.1998 AT 216898; 09.09.1999 AT 155099
(43) Veröffentlichungstag der Anmeldung: 10.10.2001
(73) Patentinhaber: Coöperatie Avebe U.A., 9641 GK Veendam (NL)
(72) Erfinder: MIKLA, Ondrej, A-3425 Langenlebarn (AT); GRÜLL, Dietmar, A-3442 Langenschönbichl (AT)
(74) Vertreter: Hatzmann, Martin
(86) Internationale Anmeldenummer: PCT/AT1999/000287
(87) Internationale Veröffentlichungsnummer: WO 2000/038539

(56) Entgegenhaltungen:
- EP-A1- 0 921 191
- EP-A1- 1 161 155
- WO-A-00/05973
- WO-A-97/03573
- DE-A1- 1 792 645
- GB-A- 1 232 497
- GB-A- 1 306 384

## Beschreibung

Die gegenständliche Erfindung betrifft Kartoffelchips und Pommes Frites auf der Basis von Kartoffeln, welche durch Frittieren, Braten bzw. Backen unter Zusatz von Fett und/oder Fettersatz fertiggestellt sind.

Unter Kartoffelchips und Pommes Frites auf der Basis von Kartoffeln werden im vorliegenden Fall solche verstanden, zu deren Herstellung Kartoffeln in ursprünglicher Form ebenso wie in bearbeiteter Form, wie etwa als Kartoffelpulver, eingesetzt wurden.

Kartoffeln werden häufig zu verschiedenen Nahrungsmittelprodukten verarbeitet, die durch Frittieren, Backen oder Braten in heißem Fett und/oder Fettersatz genussfertig gemacht werden. Die bekanntesten und vielleicht am meisten verbreiteten Produkte sind Kartoffelchips und Pommes Frites. die typische Größen und Formen aufweisen Außerdem sind Produkte auch in anderer Größe und Form bekannt wie Streifen, Würfel, Reibsel usw. Gewöhnlich werden diese Produkte durch Schneiden und Zerkleinern von geschalten Kartoffeln hergestellt Diese Kartoffelstücke können durch verschiedene bekannte Verfahrensschritte, wie Blanchieren, Mikrowellenerhitzen, Vorfrittieren, Vorbacken usw. vorbehandelt, haltbar gemacht und bis zur weiteren Verarbeitung entsprechend abgepackt gelagert werden. Oder es können diese Kartoffelstücke mit oder ohne Vorbehandlung in heißem Fett und/oder Fettersatz bei Temperaturen von 160°C bis 200°C. je nach Bedarf unterschiedlich lang, etwa zwischen 2 bis 10 min. frittiert werden.

Die Feuchtigkeit von rohen Kartoffeln liegt, abhängig von Sorten und Wachstumsbedingungen, zwischen 75% und 85%. Wenn die Kartoffelstärke, die diese Menge an Wasser enthalten, in heißem Fett und7oder Fettersatz frittiert werden, wird dieses Wasser schlagartig zum Kochen gebracht und das in Dampf umgewandelte Wasser entweicht explosionsartig aus den frittierten Kartoffelstücken. Dies führt zur Bildung von vielen kleinen Löchern und Öffnungen in den Produkten. Infolge des Bades aus Fett und/oder Fettersatz bleibt eine beträchtliche Menge Fett und/oder Fettersatz an der Oberflache der Produkte haften. Zusätzlich dazu entsteht beim Herausnehmen der Produkte aus dem heißem Bad aus Fett und/oder Fettersatz durch die Abkühlung in den kleinen Hohlraumen ein Vakuumsaugeffekt, was zur weiteren Absorption von Fett und/oder Fettersatz durch das Produkt führt. Je nach Größe und spezifischer Oberfläche können die frittierten Produkte zwischen 10% und 40% und sogar mehr Fett und/oder Fettersatz enthalten.

Der Gehalt an Fett und/oder Fettersatz von solchen Produkten ist aus mehreren Gesichtspunkten meistens unerwünscht. Einerseits ist Fett eine kalorienreiche Nahrungskomponente mit bekannten gesundheitlichen Risiken bei übermäßigem Verzehr. Es ist im Interesse eines Teiles der Bevölkerung, die Zufuhr von Kalorien und Fetten in der Nahrung stark zu reduzieren. Das bedeutet dass es aus der Sicht der richtigen Ernährung besonders wichtig ist, den Fettgehalt von Nahrungs- bzw. Lebensmittelprodukten möglichst niedrig zu halten. Andererseits sind die derzeit bekannten Fettersatzmittel synthetisch hergestellte Materialien mit Nebenwirkungen auf das Gastrointestinale System (Jacobson, M.F.; Brown, M.A.: Whorton, E.B. Jr.; Cheskin, L.J.; Zorich, N.; Miday, R... Filloon, T.: Gastrointestinal symptoms following olestra consumption. Journal of the American Medical Association, (1998) 280 (4) 325-326) und haben eine negative Wirkung auf die Absorption von fettlöslichen Vitaminen (Schlagheck, T.G.; Kesler, J.M.; Jones, M.B., Zorich, N.L.; Dugan, L.D.; Davidson, M.H.; Peters J.C.: Olestra's effect on vitamin D and E in human can be offset by increasing dietary levels of these vitamins. Journal of Nutrition (1997) 127 (8s, Assessment of the nutritional effects of olestra) 1666S-1685S) und anderen fettlöslichen nutritiven Komponenten (Schlagheck, T.G., Riccardi, K.A.; Zorich, N.L.; Torri, S.A.; Dugan, L.D.; Peters, J.C.: Olestra dose response on fat-soluble and water-soluble nutrients in humans, Journal of Nutrition (1997) 127 (8s, Assessment of the nutritional effects of olestra) 1646S-1665S). Ein übermäßiger Verzehr von Fettersatzstoffen bei normalen Konsumenten und ein mäßiger Verzehr bei empfindlichen Konsumenten kann zu einer laksativen Wirkung führen. Aus diesem Grund ist die Reduktion von diesen Stoffen in Lebensmittelprodukten ebenfalls von großer Bedeutung.

Aus ökonomischer Sicht sind Fett und Fettersatz relativ teure Rohstoffe und schlagen sich natürlich im Preis der gegenständlichen Produkte nieder. Es ist somit im Sinne der Produzenten und der Verbraucher, kein unnötiges Fett bzw. keinen unnötigen Fettersatz mit den Produkten verkaufen oder kaufen und verzehren zu müssen.

Außerdem ist ein hoher Gehalt an Fett und/oder Fettersatz mit einem fettigen, schmierigen sensorischen Eindruck verbunden, welcher zunehmend weniger Akzeptanz bei den Konsumenten findet. Auf der anderen Seite gibt es auch Produkte, welche gänzlich oder fast ganz ohne Fett hergestellt werden, aber wegen ihre schlechten sensorischen Qualität ebenfalls geringe Akzeptanz bei den Konsumenten finden.

Es werden daher schon seit einiger Zeit intensive Bemühungen unternommen, um den Fettgehalt von frittierten Kartoffelprodukten zu reduzieren, wobei immer die Optimierung der Produktionstechnologie im Vordergrund stand.

Zum Beispiel wird in der GB-PS 1,133,929 ein Verfahren zum Herstellen von Kartoffelchips beschrieben, bei welchem die geschnittenen Kartoffelscheiben bei 300°F soweit frittiert werden, dass noch eine relativ hohe Feuchte in den Chips erhalten bleibt, worauf diese anschließend mit trockener Luft unter subatmosphärischem Druck getrocknet werden

Nach der in der US-PS 4,537,7S6 beschriebenen Methode werden die Chips nach dem Frittieren der Kartoffelscheiben bei 2S0°F bis 320°F innerhalb von 10 Sekunden nach dem Herausnehmen aus dem heißen Ölbad in einem Strom von 350°F heißer Luft bis zu 10 Minuten lang auf eine Restfeuchte von 10% getrocknet

In der US-PS 4,277,510 wird eine Methode dargestellt, wo geschälte, geschnittene Kartoffeln mit einer Feuchte von 70% mittels warmer Luft auf 30% bis 65% Restfeuchte getrocknet und danach in heißem Öl frittiert werden.

Gemäß der GB-PS 1,519,049 werden die konventionell frittierten Kartoffelchips mit überhitztem Dampf behandelt, um das Oberflächenfett zu entfernen.

Laut US-PS 3,627,535 wird nach dem Frittieren von tiefgefrorenen Pommes Frites in heißem Fett eine weitere Behandlung mit gesättigtem Dampf zur Reduktion des Fettgehaltes vorgeschlagen.

Durch die in diesen Patentschriften diskutierten Methoden ist eine Reduktion des Fettgehaltes bei Kartoffelchips und/oder Pommes Frites um bis zu 30% erreichbar.

Alle diese Methoden beinhalten jedoch ergänzende technologische Maßnahmen zusätzlich zur regulären Produktion von z.B. Kartoffelchips oder Pommes Frites, wodurch erhöhte Investitionen und ein gesteigerter Materialverbrauch bedingt sind. Die sensorische Qualität der Produkte entspricht nicht der Qualität von vollfetten Standardprodukten.

Ziel der vorliegenden Erfindung ist es daher, frittierte, gebratene bzw. gebackene Kartoffelchips und Pommes Frites herzustellen, bei denen eine Fett- und/oder Fettersatzreduktion ohne aufwendigen zusätzlichen Verfahrensschritten erzielt wird.

Gemäß der vorliegenden Erfindung wird die vorstehende Aufgabe durch einen ganz anderen Zugang zu diesem Problem gelöst, indem nämlich die Reduktion der Fett-und/oder Fettersatzabsorption von frittierten, gebackenen oder gebratenen Kartoffelchips und Pommes Frites durch die Verwendung von speziellen Kartoffeln als Rohstoff erreicht wird. Die erfindungsgemäßen Kartoffelchips und Pommes Frites sind dadurch gekennzeichnet, dass die in den Kartoffeln enthaltene Kartoffelstärke aus einer Kartoffelstarke mit einem Gehalt von mindestens 95%, vorzugsweise mindestens 98%, Amylopektin besteht.

Bevorzugt wird dies dadurch erreicht, dass die in den Kartoffelchips und Pommes Frites enthaltene Kartoffelstärke aus Kartoffeln stammt, in denen durch Züchtung oder molekular-biologische bzw. gentechnische Methoden die Entwicklung der Amylose unterdrückt wurde.

Derartige Kartoffelchips und Pommes Frites zeichnen sich, wenn sie in Fett und/oder Fettersatz frittiert, gebacken oder gebraten wurden, durch einen im Vergleich zu üblichen Produkten dieser Art um bis zu 30 % verringerten Gehalt an Fett und/oder Fettersatz aus.

Die Trockensubstanz von Kartoffelknollen besteht überwiegend aus Polysacchariden, die als Stärke bekannt sind und in der Trockensubstanz von Kartoffeln bis zu 75% ausmachen. Bei konventionellen Kartoffeln besteht die Stärke im wesentlichen aus zwei chemisch unterschiedlich aufgebauten Molekülen, die als Amylose und Amylopektin bezeichnet werden. Chemisch gesehen bestehen beide Substanzen aus mehreren tausend verknüpften Glucosemolekülen. Amylose ist durch eine nahezu unverzweigte lineare Struktur verknüpfter Glucoseeinheiten gekennzeichnet. Im Amylopektin sind zahlreiche kürzere Moleküle amyloseähnlicher Struktur zu einer größeren verzweigten Struktur gebunden. Die gewöhnliche Kartoffelstärke enthält durchschnittlich 78% Amylopektin und 22% Amylose. Die anwendungstechnischen Eigenschaften der Kartoffeln sind maßgeblich durch die Eigenschaften der in ihnen enthaltenen Stärke determiniert.

In den letzten Jahren wurden durch Kreuzungen und durch gezielten Eingriffe in die Erbsubstanz der Kartoffel neue Genotypen geschaffen, welche sich in der Zusammen-setzung der Stärke von gewöhnlicher Stärke deutlich unterscheiden. So wurden transgene Kartoffelgenotypen kreiert, welche eine neuartige Kartoffelstärke enthalten, die bis zu 98% aus Amylopektin besteht. Diese neuartige Stärke hat im Vergleich zu einer gewöhnlichen Stärke unterschiedliche anwendungstechnische Eigenschaften, die in manchen Anwendungsgebieten von Vorteil sind. Es war jedoch nicht zu erwarten, dass aus transgenen Kartoffeln hergestellte Produkte, deren Stärke zu mindestens 95%, vorzugsweise zu 98% aus Amylopektin besteht, beim Frittieren in heißem Fett und/oder Fettersatz bis zu 30% weniger Fett und/oder Fettersatz aufnehmen als vergleichbare Produkte, die aus gewöhnlichen Kartoffeln hergestellt wurden. Dieses Ergebnis wird erreicht, ohne zusätzliche spezielle und aufwendige technologische Schritte in der Produktion von Kartoffelprodukten setzen zu müssen. Es können z.B. fett- und/oder fettersatzreduzierte Kartoffelchips durch gewöhnliche Produktionstechnologie hergestellt werden. Dieses Phänomen kann dadurch erklärt werden, dass durch ihre spezielle Stärkezusammensetzung beim Frittieren der Produkte weniger Hohlräume an deren Oberfläche gebildet werden, und daher in der Folge weniger Fett und/oder Fettersatz durch die Produkte absorbiert wird.

Der eindeutige Vorteil beim Einsatz dieser neuartigen Kartoffeln bei der Produktion von frittierten Kartoffelchips und Pommes Frites liegt einerseits im wirtschaftlichen Bereich, weil weniger Fett und/oder Fettersatz in der Produktion verbraucht wird, andererseits im gesundheitlichen Bereich, da durch Verzehr von solchen Produkten weniger Fett und/oder Fettersatz aufgenommen wird. Ein dritter nicht unwesentlicher Vorteil liegt darin, dass die sensorische Qualität der Kartoffelchips und Pommes Frites gesteigert wird, da diese Produkte weniger fettig aussehen, schmecken und sich anfühlen.

Es wird festgehalten, dass die neuen kartoffelhaltigen Nahrungsmittel nicht aus-schließlich unter Verwendung der neuartigen Kartoffel hergestellt werden müssen, sondern dass auch ein Gemisch mit konventionellen Kartoffelausgangsmaterialien zur Erzielung einer entsprechenden Fett- und/oder Fettersatzreduktion führt.

Die Reduktion des Gehaltes an Fett und/oder Fettersatz von Kartoffelchips und Pommes Frites durch den Einsatz der oben erwähnten gentechnisch veränderten Kartoffel in den verschiedensten Formen kann vorteilhaft für folgende Produktgruppen zutreffen, die alle durch Frittieren, Backen oder Braten in Fett und/oder Fettersatz genussfertig gemacht werden:
Kartoffelchips und ähnliche Snackartikel unterschiedlicher Größe und Gestalt, welche gänzlich oder teilweise aus Kartoffeln und/oder deren dehydratisierten Formen hergestellt sind.

Pommes Frites und ähnliche, gänzlich oder teilweise aus Kartoffeln und/oder deren dehydratisierten Formen hergestellte Produkte unterschiedlicher Größe und Gestalt.

Nahrungsmittelprodukte, die durch Frittieren, Backen oder Braten fertiggestellt werden und die getrocknete Kartoffelstücke, Kartoffelgranulate und/oder Kartoffelpulver als Komponenten enthalten, wobei sie als übrige Bestandteile Gemüse, Getreideprodukte, eiweißhaltige Lebensmittel u.dgl. aufweisen.

Das folgende Beispiel und die Ergebnisse der physikalischen und sensorischen Prüfungen zeigen die vorteilhafte Anwendung dieser transgenen Kartoffelgenotypen zur Her-stellung von fettreduzierten Kartoffelchips.

### Beispiel:

### Testprodukte:

Es wurden Kartoffelchips aus oben diskutierten transgenen Kartoffelgenotypen im Labor hergestellt. Als Standard wurden Kartoffelknollen konventioneller Sorte namens Desiree verwendet. Als Probanden wurden Kartoffelknollen ebenfalls der Sorte Desiree eingesetzt, die derart gentechnisch verändert wurde, dass die in den Knollen enthaltene Starke mindestens zu 98% aus Amylopektin bestand.

Die Kartoffelknollen wurden gewaschen, geschält und mit einem Gemüsehobel in 1,5 mm dicke Scheiben geschnitten. Die Kartoffelscheiben wurden in 190°C heißem Fett 2 Minuten lang in einer verschlossenen Fritteuse frittiert. Nach dem Herausnehmen aus dem Fett wurden die Chips abtropfen und abkühlen gelassen.

Zur Untersuchung des Fettgehaltes wurden die Chips-Proben zerkleinert und das Fett aus den Proben in einer Soxhlet Apparatur mit Petrolether extrahiert und gravimetrisch bestimmt. Die Ergebnisse der Fettbestimmung sind in Tabelle 1 zusammengestellt:

**Tabelle 1**

| Kartoffel-genotyp | Desiree konventionell | Desiree transgen |
|---|---|---|
| Fettgehalt bezogen auf Trockensubstanz | 42,02 % | 28,84 % |

Die Kartoffelchips wurden nach 24 Stunden Lagerung sensorisch durch einen Panel-test mit geschulten Panelisten anhand der ISO Norm 11035 "Sensory analysis - Identification and selection of descriptors for establishing a sensory profile by multidimensional approach" mittels einer 10 Punkte Bewertungsskala analysiert, wobei 1 Punkt für die negativste und 10 Punkte für die positivste Bewertung des gegenständlichen Merkmals stand. Es wurden sensorische Merkmale wie Aussehen, Farbe, Geruch, Geschmack und Knusprigkeit in die Analyse einbezogen und aufgrund der Ergebnisse ein sogenanntes sensorisches Profil der Testprodukte erstellt, welches im Diagramm 1 zu sehen ist.

Wie aus der Tabelle 1 ersichtlich, wiesen die Kartoffelchips aus transgener Desiree einen bedeutend niedrigeren Fettgehalt auf, als die Chips aus konventioneller Desiree. Bei der sensorischen Untersuchung bekamen beide Chips-Proben vergleichbare Noten bei den Merkmalen Farbe, Geruch und Knusprigkeit, wobei bei den Merkmalen Geschmack und Aussehen die Probe aus transgener Desiree eine merklich höhere Bewertung bekam, was eindeutig dem Unterschied im Fettgehalt zwischen den beiden Produkten zugeordnet werden konnte.

## Patentansprüche

1. Kartoffelchips und Pommes Frites, welche durch Frittieren, Braten bzw. Backen unter Zusatz von Fett und/oder Fettersatz fertiggestellt sind bzw. werden, **dadurch gekennzeichnet, dass** die Kartoffelchips und Pommes Frites aus Kartoffeln hergestellt wurden, in denen durch Züchtung oder molekularbiologische bzw. gentechnische Methoden die Entwicklung der Amylose unterdrückt wurde, und dadurch, dass die in den Kartoffeln enthaltene Kartoffelstärke aus einer Kartoffelstärke mit einem Gehalt von mindestens 95% Amylopektin besteht.

2. Kartoffelchips und Pommes Frites nach Anspruch 1, wobei die enthaltene Kartoffelstärke aus einer Kartoffelstärke mit einem Gehalt von mindestens 98% aus Amylopektin besteht.

## Claims

1. Potato chips and French fries, which are or were finished by frying, roasting or baking with the addition of fat and/or fat substitute, **characterised in that** the potato chips and French fries were produced from potatoes, in which the development of amylose was suppressed by cultivation or molecular biological or genetic methods, and **in that** the potato starch contained in the potatoes consists of a potato starch having a content of at least 95% amylopectin.

2. Potato chips and French fries according to claim 1, wherein the contained potato starch consists of a potato starch having a content of at least 98% amylopectin.

## Revendications

1. Chips de pomme de terre et pommes frites qui sont préparées par friture, rotissage ou cuisson au four en ajoutant des matières grasses et/ou substituts de matière grasse, **caractérisées en ce que** les chips de pomme de terre et les pommes frites sont produites à partir de pommes de terre, dans lesquelles par sélection ou par des procédés de biologie moléculaire ou de génie génétique, le développement d'amylose est inhibé et **en ce que** la fécule de pomme de terre contenue dans les pommes de terre consiste en une fécule de pomme de terre présentant une teneur en amylopectine d'au moins 95 %.

2. Chips de pomme de terre et pommes frites selon la revendication 1, dans lesquelles la fécule de pomme de terre contenue consiste en une fécule de pomme de terre présentant une teneur en amylopectine d'au moins 98 %.
